# EUROPÄISCHE PATENTSCHRIFT

(11) **EP 2 932 256 B1**
(45) Veröffentlichungstag und Bekanntmachung des Hinweises auf die Patenterteilung: **19.05.2021**
(21) Anmeldenummer: 14700838.7
(22) Anmeldetag: 13.01.2014
(51) Int. Cl.: G01N 29/06, G01N 29/11, G01N 29/22, G01N 29/265, G01N 29/26

(54) **VERFAHREN UND SYSTEM ZUR HANDGEFÜHRTEN ULTRASCHALLPRÜFUNG EINES PRÜFOBJEKTS**
METHOD AND SYSTEM FOR THE HAND-GUIDED ULTRASOUND CHECK OF A TEST OBJECT
PROCÉDÉ ET SYSTÈME DE CONTROLE PAR ULTRASONS A COMMANDE MANUELLE POUR DES OBJETS À CONTROLER

(30) Priorität: 22.01.2013 DE 102013200974
(43) Veröffentlichungstag der Anmeldung: 21.10.2015
(73) Patentinhaber: Siemens Aktiengesellschaft, 80333 München (DE)
(72) Erfinder: MOOSHOFER, Hubert, 80538 München (DE); GOLDAMMER, Matthias, 80687 München (DE); WISSMANN, Patrick, 81677 München (DE); LALONI, Claudio, 82024 Taufkirchen (DE)
(86) Internationale Anmeldenummer: PCT/EP2014/050478
(87) Internationale Veröffentlichungsnummer: WO 2014/114512

(56) Entgegenhaltungen:
- EP-A2- 0 296 461
- EP-A2- 0 642 036
- EP-A2- 0 642 036
- WO-A1-2008/138684
- DE-A1-102010 040 856
- US-A1- 2007 232 906
- US-A1- 2007 232 906

## Beschreibung

Die Erfindung betrifft ein Verfahren sowie ein System zur Ultraschallprüfung eines Prüfobjekts der in den Oberbegriffen der unabhängigen Patentansprüche angegebenen Art.

Zur zerstörungsfreien Prüfung von Prüfobjekten sind unterschiedlichste Ultraschallprüfverfahren bekannt. Zur besseren Lokalisierung und Trennung von Defekten bei der zerstörungsfreien Prüfung mit Ultraschall ist die Analysetechnik SAFT (Synthetic Aperture Focusing Technique) bekannt. Die Inspektion erfolgt dabei wie bei einer klassischen Ultraschallprüfung, jedoch werden die Daten ohne eine Gleichrichtung aufgezeichnet. Bei der anschließenden Analyse der Messdaten werden Amplitudensummen aus einer Vielzahl von Messsignalen für jeweilige kleine Volumenelemente, welche auch als sogenannte Voxel bezeichnet werden, ermittelt. Die Ultraschallprüfung unter Zuhilfenahme der SAFT-Analyse wird üblicherweise bei einer automatisierten Bewegung eines die Ultraschallimpulse aussendenden und die korrespondierenden Echosignale empfangenden Prüfkopfes eingesetzt.

Durch den Einsatz von sogenannten Phased-Array-Prüfköpfen können Prüfobjekte nicht nur mechanisch sondern auch elektronisch gescannt werden, d. h. dass durch eine Art elektronisches Verschieben des Prüfkopfes mehrere Messungen in einem definierten Raster durchgeführt werden. Bei einem stationären Prüfkopf können Daten, die mit demselben elektronischen Scan aufgenommen wurden, mit der SAFT-Analyse ausgewertet werden. Dies funktioniert sowohl bei unbewegtem Prüfkopf als auch bei während des elektronischen Scans bewegten Prüfkopf, wenn die exakte Sende- und Empfangsposition sowie Einschallwinkel und Fokussierung zum Rekonstruktionszeitpunkt bekannt sind.

Die EP 0 296 461 A2 zeigt ein Verfahren zum Überprüfen von Bauteilen mittels Ultraschallsignalen. Ein Ultraschallprüfkopf wird entlang einer Linie über einen Prüfkörperumfang geführt, wobei jeweilige Signale empfangen und einer jeweiligen Position und Orientierung des Prüfkopfs in Bezug auf ein Zentrum eines Bauteilquerschnitts zugeordnet werden sowie eine Mittelwertbildung erfahren.

Die WO 2008/138684 A1 zeigt ein Verfahren und eine Vorrichtung zur zerstörungsfreien Materialprüfung. Ein Prüfgegenstand wird mittels eines Prüfkopfs mit Ultraschall beaufschlagt. Die dabei reflektierten Schallwellen werden erfasst. Die Signale, die entlang des Weges vom Prüfkopf erfasst werden, werden bezüglich des Ortes im Prüfgegenstand laufzeitrichtig erfasst. Dabei werden räumlich berechnete Amplitudenverteilungen erfasst. Der Ort bzw. die Bewegung des Prüfkopfs ist zu jedem erfassten Amplituden-Laufzeit-Diagramm bekannt.

Die DE 10 2010 040 856 A1 zeigt ein Verfahren und eine Vorrichtung zur Ermittlung einer Orientierung eines innerhalb eines Bauteils bestehenden Defekts. Das Bauteil wird an verschiedenen Messpunkten mittels eines Ultraschallkopfs mit Ultraschallsignalen beaufschlagt. Jeweilige Echo-Ultraschallsignale, die von einem innerhalb des Bauteils befindlichen Punkt zu den Messpunkten reflektiert werden, werden mittels des Ultraschallkopfs empfangen und zur Ermittlung der Orientierung des Defekts ausgewertet.

Darüber hinaus ist aus der US 2007/0232906 A1 ein Ultraschall-Bildgebungssystem bekannt. Des Weiteren offenbart die EP 0 642 036 A2 ein Ultraschall-Diagnosegerät.

Es ist die Aufgabe der vorliegenden Erfindung, eine verbesserte, insbesondere handgeführte Ultraschallprüfung eines Prüfobjekts unter Zuhilfenahme der SAFT-Analyse zu ermöglichen.

Diese Aufgabe wird durch ein Verfahren sowie durch ein System zur Ultraschallprüfung mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Das erfindungsgemäße Verfahren zur Ultraschallprüfung eines Prüfobjekts umfasst die folgenden Schritte: Bewegen eines Prüfobjekts entlang einer Prüfobjektoberfläche und Aussenden von Ultraschallimpulsen in das Prüfobjekt mittels des Prüfkopfes; Empfangen jeweiliger mit den ausgesendeten Ultraschallimpulsen korrespondierender Echosignale mittels des Prüfkopfes; Erstellen einer Abbildung eines vorgegebenen Prüfbereichs des Prüfobjekts basierend auf einer Überlagerung und Mittelung von Amplitudenwerten der empfangenen Echosignale mittels einer Datenverarbeitungseinrichtung. Mit anderen Worten umfasst das Verfahren zur Ultraschallprüfung eines Prüfobjekts die bei einer SAFT-Analyse erforderlichen Schritte, wobei sich das erfindungsgemäße Verfahren dadurch auszeichnet, dass die jeweiligen Positionen des Prüfkopfes bei Aussenden der Ultraschallsignale und/oder bei Empfangen der korrespondierenden Echosignale mittels einer Erfassungseinrichtung erfasst und die jeweils erfassten Positionen des Prüfkopfes beim Erzeugen der Abbildung des Prüfbereichs des Prüfobjektes berücksichtigt werden.

Es ist somit erfindungsgemäß vorgesehen, dass die Position des Prüfkopfes auf der Oberfläche des Prüfobjekts während der Dauer der Prüfung gemessen wird. Die Messung der jeweiligen Position erfolgt dabei innerhalb vergleichsweise kurzer Intervalle und mit einem definierten Zeitbezug relativ zu den zur Inspektion des Prüfobjekts ausgesandten Ultraschallimpulsen. Vorzugsweise erfolgt die Positionsmessung jeweils dann, wenn ein Ultraschallimpuls ausgesendet wird. Zusätzlich kann auch noch jeweils eine Positionsmessung erfolgen, wenn das zu dem ausgesendeten Ultraschallimpuls korrespondierende Echosignal empfangen wird.

In Abhängigkeit von den erfassten bzw. gemessenen jeweiligen Positionen des Prüfkopfes wird eine jeweils momentane Position des Prüfkopfes, vorzugsweise zum Zeitpunkt eines jeweiligen Aussendens des Ultraschallimpulses, ermittelt und bei der SAFT-Analyse zur Bestimmung eines Abstandes zwischen einem zu rekonstruierenden Voxel und der tatsächlichen Messposition verwendet.

Durch das erfindungsgemäße Verfahren wird es ermöglicht, die Ultraschallprüfung eines Prüfobjekts unter Zuhilfenahme der SAFT-Analyse auch bei handgeführtem Prüfkopf einzusetzen. Vorzugsweise kann der Prüfkopf dabei manuell entlang der Prüfobjektoberfläche bewegt werden. Insbesondere kann der Prüfkopf bei dem erfindungsgemäßen Verfahren frei auf der Prüfobjektoberfläche geführt werden. Die Lokalisation von Defekten innerhalb des Prüfobjekts wird durch das Verfahren erheblich verbessert, wobei einzelne Defekte besser voneinander unterschieden und das Signalrauschverhältnis insbesondere bei einer manuellen, also bei einer handgeführten Prüfung, verbessert wird. Dadurch ergibt sich bei der Erstellung der Abbildung des Prüfbereichs des Prüfobjekts eine verbesserte Auflösung von Gruppenanzeigen, also von nahe beieinander liegenden Einzelanzeigen, die ohne eine SAFT-Analyse nicht voneinander getrennt werden könnten und daher als eine größere Anzeige bewertet werden würden, und insbesondere eine verbesserte Detektion von kleinen Defekten. Unter kleinen Defekten sind dabei Defekte mit einer Abmessung zu verstehen, welche im Verhältnis zur verwendeten Wellenlänge der Ultraschallimpulse klein sind. Zudem können die Prüfergebnisse, welche mit dem erfindungsgemäßen Verfahren erzielt werden, durch eine Referenzierung zu einem dreidimensionalen digitalen Modell des Prüfobjekts besonders intuitiv interpretiert werden.

Zudem ist es erfindungsgemäß vorgesehen, dass anhand der erfassten Position und Orientierung des Prüfkopfes die Mittenposition der aktiven Apertur des Prüfkopfes beim Aussenden der Ultraschallsignale ermittelt und beim Erzeugen der Abbildung des Prüfbereichs des Prüfobjekts berücksichtigt wird. Unter der aktiven Apertur ist dabei derjenige Bereich des Prüfkopfes zu verstehen, welcher als aktive Sende- bzw. Empfangsfläche für die Ultraschallimpulse bzw. die Echosignale dient. Wird beispielsweise ein Phased-Array-Prüfkopf eingesetzt, ist die Mittenposition der aktiven Apertur der Bereich, welcher gerade zum Aussenden der Ultraschallimpulse bzw. zum Empfangen der korrespondierenden Echosignale entsprechend angesteuert worden ist. Vorzugsweise wird dabei bei einem jeweiligen Aussenden der Ultraschallimpulse und/oder bei einem jeweiligen Empfangen der korrespondierenden Echosignale die Mittenposition ermittelt. Durch die Ermittlung der Mittenposition der gerade aktiven Apertur des Prüfkopfes kann eine besonders exakte Ultraschallprüfung und Erzeugung einer Abbildung des Prüfbereiches des Prüfobjekts erzielt werden.

In vorteilhafter Ausgestaltung der Erfindung ist es vorgesehen, dass bei Aussenden der Ultraschallsignale und/oder bei Empfangen der korrespondierenden Echosignale eine Orientierung des Prüfkopfes mittels der Erfassungseinrichtung erfasst und beim Erzeugen der Abbildung des Prüfobjekts berücksichtigt wird. Insbesondere bei einer manuellen Ultraschallprüfung, also einer händischen Führung des Prüfobjekts, ist es relativ einfach möglich, den Prüfkopf entlang einer nicht eben ausgebildeten Prüfobjektoberfläche zu bewegen, um auch solche Prüfobjekte mittels der Ultraschallprüfung im Hinblick auf Defekte zu untersuchen. In solchen Fällen ergibt sich die Problematik, dass die Ultraschallimpulse je nach Positionierung des Prüfkopfes an der Prüfobjektoberfläche mit unterschiedlichen Orientierungen, also unterschiedlichen Winkeln in das Prüfobjekt eingebracht werden. Die Erfassung der jeweiligen Orientierung des Prüfkopfes kann dabei beispielsweise gegenüber einem ortsfesten Referenzkoordinatensystem, einer Startorientierung des Prüfkopfes zu Beginn der Ultraschallprüfung oder dergleichen erfolgen, so dass eine eindeutige Referenz für die Bestimmung der jeweiligen Orientierung des Prüfkopfes gegeben ist. Durch die Berücksichtigung der Orientierung können sowohl unterschiedliche Winkel, mit welchen Ultraschallimpulse in das Prüfobjekt eingebracht werden, sowie jeweilige Oberflächenneigungen des Prüfobjekts berücksichtigt werden, so dass insgesamt eine verbesserte Abbildung des Prüfobjekts durch die Ultraschallprüfung ermöglicht wird.

Gemäß einer weiteren vorteilhaften Ausführungsform der Erfindung ist es vorgesehen, dass die Abbildung des Prüfbereichs des Prüfobjekts während des Bewegens des Prüfkopfes entlang der Prüfobjektoberfläche erstellt wird. Mit anderen Worten kann ein entsprechendes Analyseergebnis der Ultraschallprüfung optional bereits während der laufenden Messung angezeigt werden. Dadurch kann besonders schnell, also noch während der Durchführung der Ultraschallprüfung, auf entsprechende lokalisierte Defekte innerhalb des Prüfobjekts geschlossen werden.

Eine weitere vorteilhafte Ausführungsform der Erfindung sieht vor, dass Daten über die erfassten Positionen und/oder Orientierungen und diesen jeweils zugeordnete Zeitpunkte gespeichert werden. Diese Daten können für eine spätere Auswertung bereitgestellt werden, beispielsweise zum Nachweis dafür, dass keine relevanten Prüforte bei der Ultraschallprüfung ausgelassen worden sind, oder zur späteren Visualisierung eines dreidimensionalen Modells des Prüfobjekts.

In weiterer vorteilhafter Ausgestaltung der Erfindung ist es vorgesehen, dass die Ultraschallprüfung mit mehreren Prüfköpfen durchgeführt wird. Die Erfassung der jeweiligen Position und/oder Orientierungen wird dabei für alle Prüfköpfe durchgeführt und bei der Erstellung der Abbildung des Prüfobjekts berücksichtigt werden. Durch die Verwendung mehrerer Prüfköpfe können auch große Prüfobjekt in relativ kurzer Zeit der Ultraschallprüfung unterzogen werden.

Das erfindungsgemäße System zur Ultraschallprüfung eines Prüfobjekts umfasst einen entlang einer Prüfobjektoberfläche bewegbaren Prüfkopf, mittels welchem Ultraschallimpulse in das Prüfobjekt aussendbar und jeweilige mit den ausgesendeten Ultraschallimpulsen korrespondierende Echosignale empfangbar sind. Des Weiteren umfasst das System eine Datenverarbeitungseinrichtung, mittels welcher eine Abbildung eines vorgebbaren Prüfbereichs des Prüfobjekts basierend auf einer Überlagerung und Mittelung von Amplitudenwerten der empfangenen Echosignale erstellbar ist. Das erfindungsgemäße System zeichnet sich dabei dadurch aus, dass das System eine Erfassungseinrichtung umfasst, mittels welcher jeweilige Positionen des Prüfkopfes bei Aussenden der Ultraschallsignale und/oder bei Empfangen der korrespondierenden Echosignale erfassbar sind, wobei mittels der Datenverarbeitungseinrichtung die Abbildung des Prüfbereichs des Prüfobjekts unter Berücksichtigung der jeweils erfassten Position des Prüfkopfes erstellbar ist. Vorteilhafte Ausgestaltungen des erfindungsgemäßen Verfahrens sind dabei als vorteilhafte Ausgestaltungen des Systems anzusehen, wobei das System insbesondere Mittel umfasst, um die Verfahrensschritte durchzuführen zu können.

In vorteilhafter Ausgestaltung des Systems ist es vorgesehen, dass die Erfassungseinrichtung einen optischen Bewegungssensor umfasst, welcher an dem Prüfkopf angebracht ist, und mittels welchem die jeweils relative Position zu einem Referenzpunkt erfassbar ist. Bei dem Referenzpunkt kann es sich beispielsweise um die Position handeln, an welcher der Prüfkopf zu Beginn der Ultraschallprüfung angeordnet worden ist. Vorzugsweise umfasst die Erfassungseinrichtung dabei einen weiteren optischen Bewegungssensor, welcher mit einem vorgegebenen Abstand entfernt von dem anderen optischen Bewegungssensor an dem Prüfkopf angebracht ist und mittels welchem die jeweils relative Position zu dem Referenzpunkt erfassbar ist. Durch die Verwendung von zwei Bewegungssensoren, welche beispielsweise nach dem sogenannten Optical-Flow-Messprinzip arbeiten können, welche aus Computereingabegeräten, beispielsweise Computer-Mäusen, bekannt sind, werden lokal variierende optische Eigenschaften der Prüfobjektoberfläche zur Bewegungsdetektion herangezogen, um die jeweiligen Positionen des Prüfkopfes zu unterschiedlichen Zeitpunkten der Messung bestimmen zu können. Durch die Hinzunahme des zweiten optischen Bewegungssensors kann die Bewegungsdetektion von zwei translatorischen auf einen dritten, nämlichen rotatorischen Freiheitsgrad, erweitert werden.

Gemäß einer weiteren vorteilhaften Ausführungsform des Systems ist es vorgesehen, dass die Erfassungseinrichtung eine Mehrzahl von an dem Prüfkopf angebrachten Ultraschallsendern und zumindest einen vom Prüfkopf entfernt angeordneten Ultraschallempfänger umfasst, mittels welchem die Position und Orientierung des Prüfkopfes anhand der von den Ultraschallsendern ausgesendeten Ultraschallimpulsen ermittelbar ist. Dadurch können auf besonders zuverlässige Weise dreidimensionale Positionsinformationen und jeweilige Orientierungen des Prüfkopfes um die drei Raumachsen ermittelt werden. Es können dabei auch mehrere Ultraschallempfänger vorgesehen sein. Zudem kann die Position der Ultraschallsender und des Ultraschallempfängers oder der Ultraschallempfänger vertauscht sein. Mit anderen Worten können der oder die Ultraschallempfänger am Prüfkopf vorgesehen sein, wobei die Ultraschallsender ortsfest und entsprechend beabstandet von dem Prüfkopf angeordnet sind.

Gemäß einer weiteren vorteilhaften Ausführungsform der Erfindung ist es vorgesehen, dass die Erfassungseinrichtung eine verschwenkbare Halteeinrichtung umfasst, an welcher der Prüfkopf drehbeweglich angebracht ist, wobei die Halteeinrichtung einen Weg- und Drehgeber umfasst, mittels welchem die Position und/oder Orientierung des Prüfkopfes ermittelbar ist. Dadurch kann ebenfalls auf zuverlässige Weise eine jeweilige Positionierung des Prüfkopfes in allen drei Raumrichtungen sowie die Orientierung des Prüfkopfes um alle drei Raumachsen erfasst werden.

In weiterer vorteilhafter Ausgestaltung des Systems ist es vorgesehen, dass die Erfassungseinrichtung eine Bilderfassungseinrichtung umfasst, mittels welcher eine Mehrzahl von am Prüfkopf angebrachten optischen Markierungen erfassbar und basierend darauf die Position und Orientierung des Prüfkopfes ermittelbar sind. Bei den optischen Markierungen kann es sich beispielsweise um aktive, also Licht emittierende oder passive, das Umgebungslicht oder eine Hilfsbeleuchtung reflektierende, Markierungen handeln. Durch eine entsprechende Detektion der optischen Markierungen kann kontinuierlich eine dreidimensionale Positionierung und Orientierung des Prüfkopfes, beispielsweise relativ zu einem vorgegebenen Koordinatensystem, ermittelt werden.

Eine weitere vorteilhafte Ausführungsform des Systems sieht vor, dass die Erfassungseinrichtung eine am Prüfkopf angebrachte Bilderfassungseinrichtung umfasst, mittels welcher eine Mehrzahl von an der Prüfobjektoberfläche angebrachten optischen Markierungen erfassbar und basierend darauf die Position und Orientierung des Prüfkopfes ermittelbar ist. Vorzugsweise umfasst die Erfassungseinrichtung eine Projektionseinrichtung, mittels welcher die optischen Markierungen auf die Prüfobjektoberfläche mit einem vorgebbaren Muster projizierbar sind. Das vorgegebene Muster kann beispielsweise ein Punkt-, Streifen, Schachbrettmuster oder dergleichen sein. Vorteilhaft ist dabei eine Ausführung des Musters, das auf eine vorgegebene Art lokal variiert, beispielsweise durch eine Kodierung mittels der Punktform, der Anordnung der Punkte, der Wellenlänge oder dergleichen. Dadurch wird eine besonders einfache und zuverlässige Ermittlung der Positionierung und Orientierung des Prüfkopfes ermöglicht.

Schließlich ist es in weiterer vorteilhafter Ausgestaltung des Systems vorgesehen, dass der Prüfkopf als Senkrechtprüfkopf, Winkelprüfkopf oder als Phased-Array-Prüfkopf ausgebildet ist.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

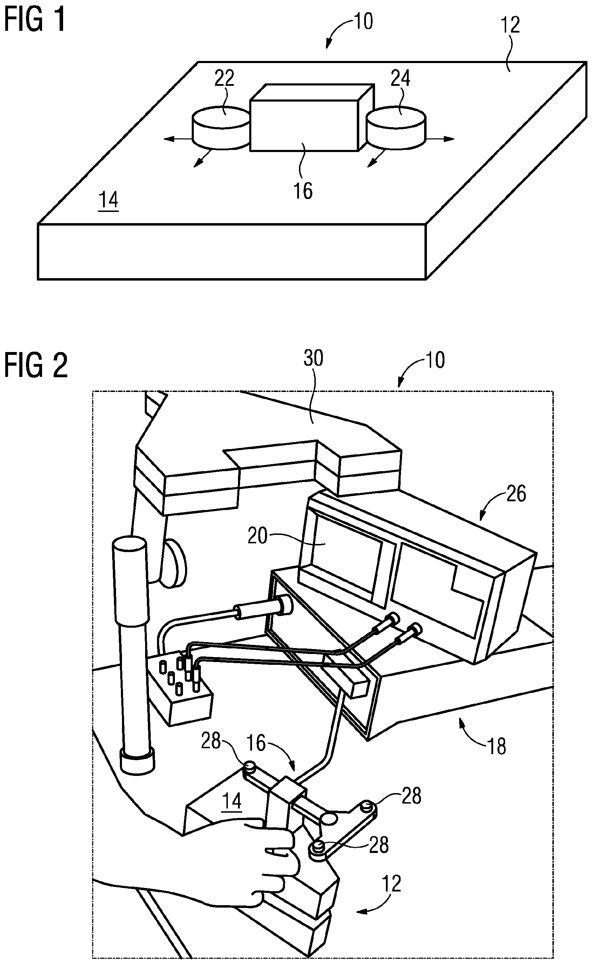

- FIG 1: eine schematische Perspektivansicht eines Systems zur Ultraschallprüfung eines Prüfobjekts, wobei zwei optische Bewegungssensoren zur Erfassung der Position und Orientierung des Prüfkopfes an diesem angeordnet sind;
- FIG 2: eine schematische Perspektivansicht einer alternativen Ausführungsform des Systems zur Ultraschallprüfung eines Prüfobjekts, wobei an einem Arm ein Ultraschallempfänger oberhalb eines T-förmig ausgebildeten Prüfkopfes angeordnet ist, an welchem seinerseits drei Ultraschallsender angebracht sind;

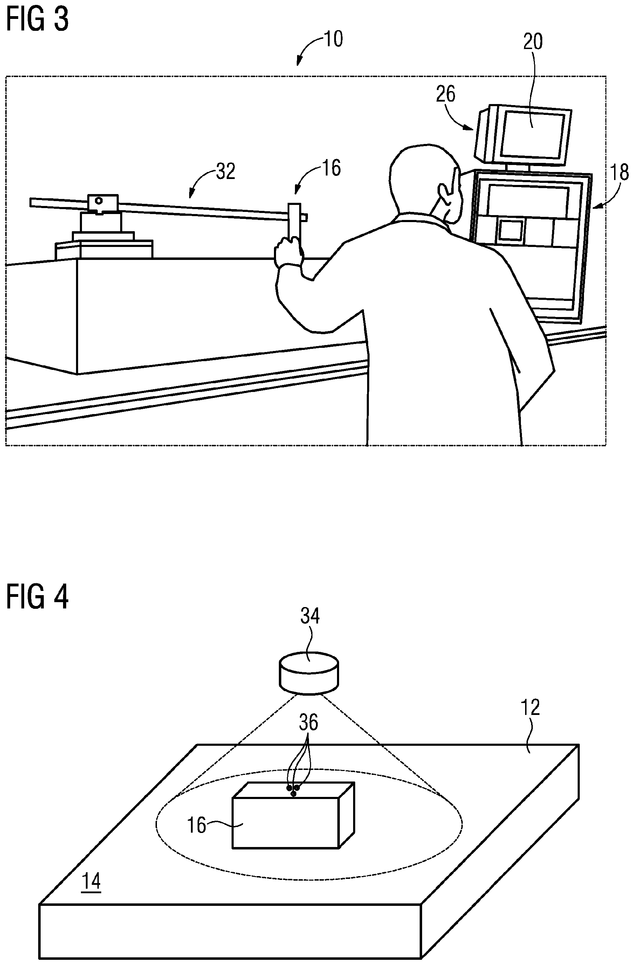

- FIG 3: eine Perspektivansicht einer weiteren alternativen Ausführungsform zur Ultraschallprüfung eines Prüfobjekts, wobei ein handgeführter Prüfkopf an einer verschwenkbaren Halteeinrichtung angeordnet ist;
- FIG 4: eine schematische Perspektivansicht einer weiteren Ausführungsform des Systems zur Ultraschallprüfung eines Prüfobjekts, wobei eine Mehrzahl von optischen Markierungen an einem Prüfkopf angebracht ist und eine oberhalb des Prüfkopfs angeordnete Bilderfassungseinrichtung vorgesehen ist; und in

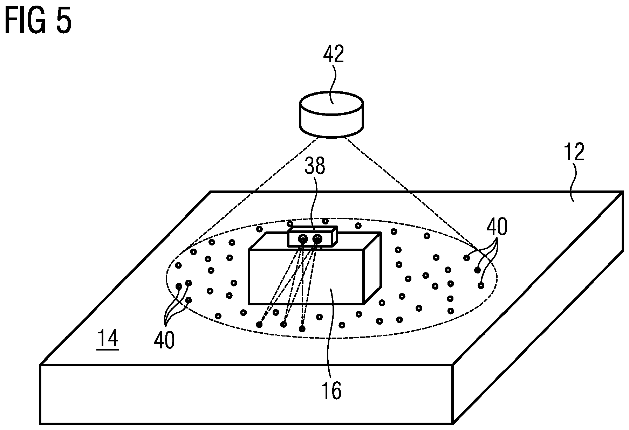

- FIG 5: eine schematische Perspektivansicht einer weiteren Ausführungsform des Systems zur Ultraschallprüfung eines Prüfobjekts, wobei eine Bilderfassungseinrichtung am Prüfkopf angebracht ist, mittels welcher eine Mehrzahl von an der Prüfobjektoberfläche angebrachte optische Markierungen erfassbar sind.

In den Figuren werden gleiche oder funktionsgleiche Elemente mit den gleichen Bezugszeichen versehen.

Ein insgesamt mit 10 bezeichnetes System zur Ultraschallprüfung eines Prüfobjekts 12 ist in einer schematischen Perspektivansicht in FIG 1 gezeigt. Das System 10 umfasst einen entlang einer Prüfobjektoberfläche 14 bewegbaren Prüfkopf 16, mittels welchem Ultraschallimpulse in das Prüfobjekt 12 aussendbar und jeweilige mit den ausgesendeten Ultraschallimpulsen korrespondierende Echosignale empfangbar sind. Das System 10 umfasst des Weiteren eine hier nicht dargestellte Datenverarbeitungseinrichtung 18, mittels welcher eine hier ebenfalls nicht dargestellte Abbildung 20 eines Prüfbereichs des Prüfobjekts 12 basierend auf einer Überlagerung und Mittlung von Amplitudenwerten der empfangenen Echosignale erstellbar ist. Mit anderen Worten ist das System 10 zur Ultraschallprüfung des Prüfobjekts 12 dazu ausgelegt, eine sogenannte SAFT-Analyse (Syntetic Aperture Focusing Technique) im Rahmen der Ultraschallprüfung des Prüfobjekts 12 durchzuführen.

Das System 10 umfasst des Weiteren eine hier nicht näher bezeichnete Erfassungseinrichtung, mittels welcher jeweilige Positionen des Prüfkopfes 16 bei Aussenden der Ultraschallsignale und bei Empfangen der korrespondierenden Echosignale erfassbar sind. Mittels der Datenverarbeitungseinrichtung 18 ist die Abbildung 20 des Prüfobjekts 12 in Abhängigkeit von den jeweils erfassten Positionen und Orientierungen des Prüfkopfes 16 erstellbar.

Im vorliegend in FIG 1 dargestellten Fall umfasst die Erfassungseinrichtung zwei optische Bewegungssensoren 22, 24, welche voneinander beabstandet an jeweiligen Seiten des Prüfkopfes 16 angebracht sind. Bei den Bewegungssensoren 22, 24 handelt es sich vorliegend um 2D-Bewegungssensoren, welche beispielsweise nach dem Optical-Flow-Messprinzip, welches beispielsweise von Computermäusen bekannt ist, arbeiten. Dabei werden lokal variierende optische Eigenschaften der Prüfobjektoberfläche 14 zur Bewegungsdetektion herangezogen. Mit Hilfe der beiden optischen Bewegungssensoren 22, 24 kann die jeweils relative Position zu einem Referenzpunkt, beispielsweise zu einem Startpunkt des Prüfkopfes 16 zu Beginn der Ultraschallprüfung, erfasst werden. Durch die Verwendung der beiden optischen Bewegungssensoren 22, 24 können neben der zweidimensionalen Positionserfassung des Prüfkopfes 16 während der Ultraschallprüfung auch als zusätzlicher Freiheitsgrad die Orientierung des Prüfkopfes in Form einer jeweiligen Drehbewegung um die Normale zur Prüfobjektoberfläche 14 erfasst werden.

Nachfolgend wird ein Verfahren zur Ultraschallprüfung des Prüfobjekts 12 erläutert. Der Prüfkopf 16 wird manuell, also von Hand, entlang der Prüfobjektoberfläche 14 bewegt, wobei Ultraschallimpulse in das Prüfobjekt 12 ausgesendet werden. Jeweilige mit den ausgesendeten Ultraschallimpulsen korrespondierende Echosignale werden dabei mittels des Prüfkopfes 16 empfangen. Während der Bewegung des Prüfkopfes 16 entlang der Prüfobjektoberfläche 14 werden unter Zuhilfenahme der optischen Bewegungssensoren 22, 24 die jeweilige Position und Orientierung des Prüfkopfes bei Aussenden der jeweiligen Ultraschallsignale und bei Empfangen der korrespondierenden Echosignale erfasst.

Basierend auf einer Überlagerung und Mittelung von Amplitudenwerten der empfangenen Echosignale wird mittels der Datenverarbeitungseinrichtung 18 eine Abbildung 20 eines zu überprüfenden Bereichs des Prüfobjekts erstellt. Dabei wird je nachdem, welcher Teil des Prüfobjekts 12 mittels der Ultraschallprüfung untersucht worden ist, nur ein Teilbereich oder von dem gesamten Prüfobjekt 12 eine Abbildung 20 erstellt. Die jeweils erfassten Positionen und Orientierungen des Prüfkopfes 16 werden beim Erzeugen der Abbildung 20 des Prüfobjekts 12 berücksichtigt. Es wird aus den gemessenen Positionen und Orientierungen und dem jeweiligen Zeitbezug die momentane Position und Orientierung des Prüfkopfes 16 zum Zeitpunkt jedes Ultraschallimpulses berechnet und bei der sogenannten SAFT-Analyse zur Bestimmung des Abstandes zwischen rekonstruiertem jeweiligen Voxel und Messposition benutzt. Dabei wird anhand der erfassten Position und Orientierung des Prüfkopfes 16 die Mittenposition der aktiven Apertur des Prüfkopfes beim Aussenden der Ultraschallsignale ermittelt und beim Erzeugen der Abbildung des Prüfbereichs des Prüfobjekts 12 berücksichtigt. Unter der aktiven Apertur ist dabei der Teil des Prüfkopfes 16 zu verstehen, welcher als wirksame Sende- bzw. Empfangsfläche dient. Ein räumlicher Versatz zwischen der jeweiligen Positionsmessung und der Position des Prüfkopfes 16 wird mit Hilfe der erfassten Information über die Prüfkopforientierung herausgerechnet

Die Abbildung 20 des Prüfobjekts 12 wird dabei bereits während des Bewegens des Prüfkopfes 16 entlang der Prüfobjektoberfläche 14 erstellt. Somit werden bereits frühzeitig entsprechende Fehlstellen, Defekte und dergleichen innerhalb des Prüfobjekts 12 erkannt und mittels der erstellten Abbildung 20, beispielsweise auf einem hier nicht dargestellten Monitor 26 visualisiert.

Die während der Ultraschallprüfung erfassten Daten über jeweilige Positionen und diesen jeweils zugeordnete Zeitpunkte werden gespeichert, so dass diese Informationen bzw. Daten für eine spätere Auswertung zur Verfügung stehen, beispielsweise als Nachweis dafür, dass kein relevanter Prüfort an dem Prüfobjekt 12 bei der Ultraschallprüfung ausgelassen wurde oder auch zur Visualisierung mittels eines späteren 3D-Modells des Prüfobjekts 12.

Die Ultraschallprüfung kann entgegen der hier gezeigten Darstellung auch mit mehreren weiteren Prüfköpfen durchgeführt werden, was sich insbesondere dann anbietet, wenn der Prüfobjekt 12 bzw. das zu untersuchende Gebiet des Prüfobjekts 12 besonders groß sein sollte. Der Prüfkopf 16 bzw. die weiteren Prüfköpfe können dabei als Senkrechtprüfkopf, Winkelprüfkopf oder als Phased-Array-Prüfkopf ausgebildet sein.

In FIG 2 ist in einer Perspektivansicht eine alternative Ausführungsform des Systems 10 gezeigt. Vorliegend umfasst die hier nicht näher bezeichnete Erfassungseinrichtung drei Ultraschallsender 28, welche an dem im vorliegenden Fall T-förmig ausgebildeten Prüfkopf 16 angeordnet sind, wobei genauer gesagt ein T-förmiges Teil an dem Prüfkopf 16 angebracht ist, an welchem die Ultraschallsender 28 angeordnet sind. Des Weiteren ist ein vom Prüfkopf 16 entfernt angeordneter Ultraschallempfänger 30 vorgesehen, mittels welchem die Position und Orientierung des Prüfkopfes 16 anhand der von den Ultraschallsendern 28 ausgesendeten Ultraschallimpulse ermittelbar ist. Die Erfassung der Position und Orientierung erfolgt mit anderen Worten also mittels eines sogenannten akustischen Trackings. Anhand von Laufzeitmessungen können die Abstände zwischen den Ultraschallsendern 28 und dem Ultraschallempfänger 30 bestimmt und durch eine Triangulation in eine dreidimensionale Position und Orientierung im Raum umgerechnet werden, wodurch auf zuverlässige Weise die jeweiligen Positionierungen und Orientierungen des Prüfkopfs 16 während dessen Bewegung entlang der Prüfobjektoberfläche 14 bestimmt werden können.

Eine weitere alternative Ausführungsform des Systems 10 zur Ultraschallprüfung des Prüfobjekts 12 ist in einer Perspektivansicht in FIG 3 gezeigt. Im vorliegend gezeigten Fall umfasst die Erfassungseinrichtung eine verschwenkbare Halteeinrichtung 32, welche als eine Art Schwenkarm ausgebildet ist. An der Halteeinrichtung 32 ist an dessen Ende der Prüfkopf 16 drehbar abgebracht, wobei die Halteeinrichtung 32 eine Mehrzahl von hier nicht näher bezeichneten Weg- und Drehgebern umfasst, mittels welchen die Position und Orientierung des Prüfkopfes 16 ermittelbar ist. Der Prüfkopf 16 kann dabei entsprechend der vorhandenen Freiheitsgrade der Halteeinrichtung 32 entlang der Prüfobjektoberfläche 14 bewegt werden, wobei mittels der Weg- und Drehgeber jeweils die Positionierung und Orientierung des Prüfkopfes 16 auf zuverlässige Weise erfassbar ist.

In FIG 4 ist in einer schematischen Perspektivansicht eine weitere Ausführungsform des Systems 10 zur Ultraschallprüfung des Prüfobjekts 12 gezeigt. Die Erfassungseinrichtung umfasst im vorliegenden Fall eine Bilderfassungseinrichtung 34, mittels welcher eine Mehrzahl von am Prüfkopf 16 angebrachten optischen Markierungen 36 erfassbar und basierend darauf die Position und Orientierung des Prüfkopfes 16 ermittelbar sind. Die Positionsmessung erfolgt also mittels eines externen optischen Trackings. Der bewegliche Prüfkopf 16 weist optische Marker auf, die in Form der optischen Markierungen 36 erfassbar sind. Die optischen Markierungen 36 können beispielsweise aktiv, also Licht emittierend, oder passiv, das Umgebungslicht oder eine Hilfsbeleuchtung reflektierend, ausgebildet sein. Die Bilderfassungseinrichtung 34 kann beispielsweise als Stereo-Kamerasystem ausgebildet sein, mittels welcher die optischen Markierungen 36 detektiert und basierend darauf kontinuierlich deren dreidimensionale Positionierung und Orientierung im Raum relativ zu einem Bezugskoordinatensystem ermittelt werden.

Schließlich ist in FIG 5 eine weitere alternative Ausführungsform des Systems 10 zur Ultraschallprüfung des Prüfobjekts 12 gezeigt. Die Erfassungseinrichtung umfasst im vorliegenden Fall eine am Prüfkopf 16 angebrachte Bilderfassungseinrichtung 38, mittels welcher eine Mehrzahl von an der Prüfobjektoberfläche 14 angebrachte optische Markierungen 40 erfassbar und basierend darauf die Position und Orientierung des Prüfkopfes 16 ermittelbar ist. Die Positionsmessung bzw. Orientierungsmessung des Prüfkopfes 16 erfolgt im vorliegend gezeigten Fall mittels eines internen optischen Trackings.

Die Erfassungseinrichtung umfasst eine unbeweglich gelagerte Projektionseinrichtung 42, welche geeignete Muster in Form der optischen Markierungen 40 auf die Prüfobjektoberfläche 14 projiziert. Der bewegliche Prüfkopf 16 weist eine optische Trackingeinrichtung in Form der Bilderfassungseinrichtung 18 auf, welche z. B. als Stereo-Kamerasystem ausgebildet sein kann, mittels welcher kontinuierlich die Position des Prüfkopfes 16 relativ zu dem projizierten Muster ermittelt werden kann. Mittels der Projektionseinrichtung 42 können die optischen Markierungen 40 auf die Prüfobjektoberfläche 14 mit einem vorgebbaren Muster projiziert werden. Das Muster kann beispielsweise ein Punkt-, Streifen- oder Schachbrettmuster sein. Das Muster wird dabei lokal über der Prüfobjektoberfläche 14 variiert, indem eine Kodierung mittels der Punktform, der Anordnung der Punkte oder der Wellenlänge vorgegeben wird. Dadurch kann auf besonders einfache und zuverlässige Weise die Positionierung und Orientierung des Prüfkopfes 16 ermittelt werden.

Mittels der unterschiedlichen Ausführungsformen des Systems 10 und dem erläuterten Verfahren zur Ultraschallüberprüfung eines Prüfobjekts kann das an und für sich bekannte SAFT-Verfahren auch bei einer manuellen Führung eines Prüfkopfes auf zuverlässige Weise angewendet werden, indem wie in der erläuterten Weise eine Positions- und Orientierungserfassung des Prüfkopfes 16 während der Ultraschallprüfung des Prüfobjekts 12 durchgeführt und bei der Erstellung einer Abbildung eines zu überprüfenden Bereichs des Prüfobjekts 12 berücksichtigt wird.

## Patentansprüche

1. Verfahren zur Ultraschallprüfung eines Prüfobjekts (12), mit den Schritten:
- Bewegen eines Prüfkopfes (16) entlang einer Prüfobjektsoberfläche (14) und Aussenden von Ultraschallimpulsen in das Prüfobjekt (12) mittels des Prüfkopfes (16) ;
- Empfangen jeweiliger mit den ausgesendeten Ultraschallimpulsen korrespondierender Echosignale mittels des Prüfkopfes (16);
- Erstellen einer Abbildung (20) eines vorgegebenen Prüfbereichs des Prüfobjekts (12) basierend auf einer Überlagerung und Mittelung von Amplitudenwerten der empfangenen Echosignale mittels einer Datenverarbeitungseinrichtung (18);
- Erfassen der jeweiligen Position des Prüfkopfes (16) bei Aussenden der Ultraschallsignale und/oder bei Empfangen der korrespondierenden Echosignale mittels einer Erfassungseinrichtung;
- Berücksichtigen der jeweils erfassten Positionen des Prüfkopfes (16) beim Erzeugen der Abbildung (20) des Prüfbereichs des Prüfobjekts (12);
**dadurch gekennzeichnet, dass**
anhand der erfassten Position und Orientierung des Prüfkopfes (16) die Mittenposition der aktiven Apertur des Prüfkopfes (16) beim Aussenden der Ultraschallsignale ermittelt und beim Erzeugen der Abbildung (20) des Prüfbereichs des Prüfobjekts (12) berücksichtigt wird, wobei unter der aktiven Apertur derjenige Bereich des Prüfkopfes (16) zu verstehen ist, welcher als aktive Sende- bzw. Empfangsfläche für die Ultraschallimpulse bzw. die Echosignale dient.

2. Verfahren nach Anspruch 1,
**dadurch gekennzeichnet, dass**
der Prüfkopf (16) manuell entlang der Prüfobjektoberfläche (14) bewegt wird.

3. Verfahren nach Anspruch 1 oder 2,
**dadurch gekennzeichnet, dass**
der Prüfkopf (16) auf der Prüfobjektoberfläche (14) frei geführt wird.

4. Verfahren nach Anspruch einem der vorhergehenden Ansprüche,
**dadurch gekennzeichnet, dass**
bei Aussenden der Ultraschallsignale und/oder bei Empfangen der korrespondierenden Echosignale eine Orientierung des Prüfkopfes (16) mittels der Erfassungseinrichtung erfasst und beim Erzeugen der Abbildung (20) des Prüfbereichs des Prüfobjekts (12) berücksichtigt wird.

5. Verfahren nach einem der vorhergehenden Ansprüche,
**dadurch gekennzeichnet, dass**
die Abbildung (20) des Prüfbereichs des Prüfobjekts (12) während des Bewegens des Prüfkopfes (16) entlang der Prüfobjektoberfläche (14) erstellt wird.

6. Verfahren nach einem der vorhergehenden Ansprüche,
**dadurch gekennzeichnet, dass**
Daten über die erfassten Positionen und/oder Orientierungen und diesen jeweils zugeordnete Zeitpunkte gespeichert werden.

7. Verfahren nach einem der vorhergehenden Ansprüche,
**dadurch gekennzeichnet, dass**
die Ultraschallprüfung mit mehreren Prüfköpfen (16) durchgeführt wird.

8. System (10) zur Ultraschallprüfung eines Prüfobjekts (12), mit:
- einem entlang einer Prüfobjektoberfläche (14) bewegbaren Prüfkopf (16), mittels welchem Ultraschallimpulse in das Prüfobjekt (16) aussendbar und jeweilige mit den ausgesendeten Ultraschallimpulsen korrespondierende Echosignale empfangbar sind;
- einer Datenverarbeitungseinrichtung (18), mittels welcher eine Abbildung (20) eines vorgebbaren Prüfbereichs des Prüfobjekts (12) basierend auf einer Überlagerung und Mittelung von Amplitudenwerten der empfangenen Echosignale erstellbar ist;
wobei
- das System (10) eine Erfassungseinrichtung umfasst, mittels welcher jeweilige Positionen des Prüfkopfes (16) bei Aussenden der Ultraschallsignale und/oder bei Empfangen der korrespondierenden Echosignale erfassbar sind;
- mittels der Datenverarbeitungseinrichtung (18) die Abbildung (20) des Prüfbereichs des Prüfobjekts (12) unter Berücksichtigung der jeweils erfassten Positionen des Prüfkopfes (16) erstellbar ist;
- **dadurch gekennzeichnet, dass**
das System (10) dazu ausgelegt ist, anhand der erfassten Position und Orientierung des Prüfkopfes (16) die Mittenposition der aktiven Apertur des Prüfkopfes (16) beim Aussenden der Ultraschallsignale zu ermitteln und beim Erzeugen der Abbildung (20) des Prüfbereichs des Prüfobjekts (12) zu berücksichtigen, wobei unter der aktiven Apertur derjenige Bereich des Prüfkopfes (16) zu verstehen ist, welcher als aktive Sende- bzw. Empfangsfläche für die Ultraschallimpulse bzw. die Echosignale dient.

9. System (10) nach Anspruch 8,
**dadurch gekennzeichnet, dass**
die Erfassungseinrichtung einen optischen Bewegungssensor (22) umfasst, welcher an dem Prüfkopf (16) angebracht ist und mittels welchem die jeweils relative Position zu einem Referenzpunkt erfassbar ist.

10. System (10) nach Anspruch 9,
**dadurch gekennzeichnet, dass**
die Erfassungseinrichtung einen weiteren optischen Bewegungssensor (24) umfasst, welcher mit einem vorgegebenen Abstand entfernt von dem anderen optischen Bewegungssensor (22) an dem Prüfkopf (16) angebracht ist und mittels welchem die jeweils relative Position zu dem Referenzpunkt erfassbar ist.

11. System (10) nach Anspruch 8,
**dadurch gekennzeichnet, dass**
die Erfassungseinrichtung eine Mehrzahl von an dem Prüfkopf (16) angebrachten Ultraschallsendern (28) und zumindest einen vom Prüfkopf (16) entfernt angeordneten Ultraschallempfänger (30) umfasst, mittels welchem die Position und Orientierung des Prüfkopfes (16) anhand der von den Ultraschallsendern (28) ausgesendeten Ultraschallimpulse ermittelbar ist.

12. System (10) nach Anspruch 11,
**dadurch gekennzeichnet, dass**
die Ultraschallsender (28) und der Ultraschallempfänger vertauscht eingesetzt werden.

13. System (10) nach Anspruch 8,
**dadurch gekennzeichnet, dass**
die Erfassungseinrichtung eine verschwenkbare Halteeinrichtung (32) umfasst, an welchem der Prüfkopf (16) drehbeweglich angebracht ist, wobei die Halteeinrichtung (32) einen Weg- und Drehgeber umfasst, mittels welchen die Position und Orientierung des Prüfkopfes (16) ermittelbar ist.

14. System (10) nach Anspruch 8,
**dadurch gekennzeichnet, dass**
die Erfassungseinrichtung eine Bilderfassungseinrichtung (34) umfasst, mittels welcher eine Mehrzahl von am Prüfkopf (16) angebrachten optische Markierungen (36) erfassbar und basierend darauf die Position und Orientierung des Prüfkopfes (16) ermittelbar ist.

15. System (10) nach Anspruch 8,
**dadurch gekennzeichnet, dass**
die Erfassungseinrichtung eine am Prüfkopf (16) angebrachte Bilderfassungseinrichtung (38) umfasst, mittels welcher eine Mehrzahl von an der Prüfobjektoberfläche (14) angebrachte optische Markierungen (40) erfassbar und basierend darauf die Position und Orientierung des Prüfkopfes (16) ermittelbar ist.

16. System (10) nach Anspruch 15,
**dadurch gekennzeichnet, dass**
die Erfassungseinrichtung eine Projektionseinrichtung (42) umfasst, mittels welcher die optischen Markierungen (40) auf die Prüfobjektoberfläche 14 mit einem vorgebbaren Muster projizierbar sind.

17. System (10) nach einem der Ansprüche 8 bis 15,
**dadurch gekennzeichnet, dass**
der Prüfkopf (16) als Senkrechtprüfkopf, Winkelprüfkopf oder als Phased-Array-Prüfkopf ausgebildet ist.

## Claims

1. Method for the ultrasonic testing of a test object (12), comprising the steps of:
- moving a test head (16) along a test object surface (14) and emitting ultrasound pulses into the test object (12) by means of the test head (16);
- receiving respective echo signals corresponding to the emitted ultrasound pulses by means of the test head (16);
- compiling an image (20) of a predetermined test region of the test object (12) on the basis of superposition and averaging of amplitude values of the received echo signals by means of a data-processing device (18);
- detecting the respective position of the test head (16) during emission of the ultrasound signals and/or during reception of the corresponding echo signals by means of a detecting device;
- taking the respectively detected positions of the test head (16) into account during generation of the image (20) of the test region of the test object (12);
**characterized in that**
the central position of the active aperture of the test head (16) during emission of the ultrasound signals is determined with the aid of the detected position and orientation of the test head (16) and is taken into account during generation of the image (20) of the test region of the test object (12), wherein an active aperture is intended to mean that region of the test head (16) which is used as an active emission or reception surface for the ultrasound pulses or the echo signals, respectively.

2. Method according to Claim 1,
**characterized in that**
the test head (16) is moved manually along the test object surface (14).

3. Method according to Claim 1 or 2,
**characterized in that**
the test head (16) is guided freely on the test object surface (14) .

4. Method according to any one of the preceding claims,
**characterized in that**
an orientation of the test head (16) during emission of the ultrasound signals and/or during reception of the corresponding echo signals is detected by means of the detecting device and is taken into account during generation of the image (20) of the test region of the test object (12).

5. Method according to any one of the preceding claims,
**characterized in that**
the image (20) of the test region of the test object (12) is compiled during the movement of the test head (16) along the test object surface (14).

6. Method according to any one of the preceding claims,
**characterized in that**
data about the detected positions and/or orientations and times respectively assigned thereto are stored.

7. Method according to any one of the preceding claims,
**characterized in that**
the ultrasonic testing is carried out with a plurality of test heads (16).

8. System (10) for the ultrasonic testing of a test object (12), comprising:
- a test head (16) which can be moved along a test object surface (14), by means of which ultrasound pulses can be emitted into the test object (16) and respective echo signals corresponding to the emitted ultrasound pulses can be received;
- a data-processing device (18), by means of which an image (20) of a predeterminable test region of the test object (12) can be compiled on the basis of superposition and averaging of amplitude values of the received echo signals;
wherein
- the system (10) comprises a detecting device, by means of which respective positions of the test head (16) during emission of the ultrasound signals and/or during reception of the corresponding echo signals can be detected;
- the image (20) of the test region of the test object (12) can be compiled by means of the data-processing device (18) while taking the respectively detected positions of the test head (16) into account;
- **characterized in that**
the system (10) is designed to determine the central position of the active aperture of the test head (16) during emission of the ultrasound signals with the aid of the detected position and orientation of the test head (16) and take account thereof during generation of the image (20) of the test region of the test object (12), wherein an active aperture is intended to mean that region of the test head (16) which is used as an active emission or reception surface for the ultrasound pulses or the echo signals, respectively.

9. System (10) according to Claim 8,
**characterized in that**
the detecting device comprises an optical movement sensor (22), which is fitted on the test head (16) and by means of which the respective position relative to a reference point can be detected.

10. System (10) according to Claim 9,
**characterized in that**
the detecting device comprises a further optical movement sensor (24), which is fitted on the test head (16) at a predetermined distance away from the other optical movement sensor (22) and by means of which the respective position relative to the reference point can be detected.

11. System (10) according to Claim 8,
**characterized in that**
the detecting device comprises a multiplicity of ultrasound emitters (28) fitted on the test head (16) and at least one ultrasound receiver (30), which is arranged at a distance from the test head (16) and by means of which the position and orientation of the test head (16) can be determined with the aid of the ultrasound pulses emitted by the ultrasound emitters (28) .

12. System (10) according to Claim 11,
**characterized in that**
the ultrasound emitters (28) and the ultrasound receiver are used interchanged.

13. System (10) according to Claim 8,
**characterized in that**
the detecting device comprises a swivellable holding device (32), on which the test head (16) is fitted so that it can be moved in rotation, the holding device (32) comprising a distance and rotation transducer, by means of which the position and orientation of the test head (16) can be determined.

14. System (10) according to Claim 8,
**characterized in that**
the detecting device comprises an image acquisition device (34), by means of which a multiplicity of optical markings (36) applied on the test head (16) can be detected, and on the basis thereof the position and orientation of the test head (16) can be determined.

15. System (10) according to Claim 8,
**characterized in that**
the detecting device comprises an image acquisition device (38) fitted on the test head (16), by means of which a multiplicity of optical markings (40) applied on the test object surface (14) can be detected, and on the basis thereof the position and orientation of the test head (16) can be determined.

16. System (10) according to Claim 15,
**characterized in that**
the detecting device comprises a projection device (42), by means of which the optical markings (40) can be projected onto the test object surface (14) with a predetermined pattern.

17. System (10) according to any one of Claims 8 to 15,
**characterized in that**
the test head (16) is configured as a perpendicular test head, angled test head or phased-array test head.

## Revendications

1. Procédé de contrôle par ultrasons d'un objet (12) à contrôler comprenant les stades :
- on déplace une tête (16) de contrôle le long d'une surface (14) de l'objet à contrôler et on envoie des impulsions d'ultrason dans l'objet (12) à contrôler au moyen de la tête (16) de contrôle;
- on reçoit au moyen de la tête (16) de contrôle des signaux d'écho correspondant respectivement aux impulsions d'ultrason envoyées;
- on établit, au moyen d'un dispositif (18) de traitement de données, une représentation (20) d'une région à contrôler, donnée à l'avance, de l'objet (12) à contrôler, sur la base d'une superposition et d'une formation de moyenne de valeurs d'amplitude des signaux d'écho reçus;
- on détecte, au moyen d'un dispositif de détection, la position respective de la tête (16) de contrôle lors de l'envoi des signaux d'ultrason et/ou lors de la réception des signaux d'écho correspondants;
- on tient compte des positions détectées respectivement de la tête (16) de contrôle lors de la production de la représentation (20) de la région à contrôler de l'objet (12) à contrôler;
**caractérisé en ce que**,
à l'aide de la position et de l'orientation détectées de la tête (16) de contrôle, on détermine la position médiane de l'ouverture active de la tête (16) de contrôle lors de l'envoi des signaux d'ultrason et on en tient compte lors de la production de la représentation (20) de la région à contrôler de l'objet (12) à contrôler, dans lequel, par ouverture active, on entend la région de la tête (16) de contrôle, qui sert de surface active d'envoi ou de réception des impulsions d'ultrason ou des signaux d'écho.

2. Procédé suivant la revendication 1,
**caractérisé en ce que**
on déplace la tête (16) de contrôle manuellement le long de la surface (14) de l'objet à contrôler.

3. Procédé suivant la revendication 1 ou 2,
**Caractérisé en ce que**
on fait passer librement la tête (16) de contrôle sur la surface (14) de l'objet à contrôler.

4. Procédé suivant l'une des revendications précédentes,
**caractérisé en ce que**
lors de l'envoi des signaux d'ultrason et/ou lors de la réception des signaux d'écho correspondants, on détecte une orientation de la tête (16) de contrôle au moyen du dispositif de détection et on en tient compte lors de la production de la représentation (20) de la région à contrôler de l'objet (12) à contrôler.

5. Procédé suivant l'une des revendications précédentes,
**caractérisé en ce que**
on établit la représentation (20) de la région à contrôler de l'objet (12) à contrôler pendant le déplacement de la tête (16) de contrôle le long de la surface (14) de l'objet à contrôler.

6. Procédé suivant l'une des revendications précédentes,
**Caractérisé en ce que**
on met en mémoire des données sur les positions et/ou les orientations détectées et des instants qui leur sont associés respectivement.

7. Procédé suivant l'une des revendications précédentes,
**caractérisé en ce que**
on effectue le contrôle par ultrason par plusieurs têtes (16) de contrôle.

8. Système (10) de contrôle par ultrasons d'un objet (12) à contrôler comprenant :
- une tête (16) de contrôle mobile le long d'une surface (14) de l'objet à contrôler et au moyen de laquelle on peut envoyer des impulsions d'ultrason dans l'objet (16) à contrôler et on peut recevoir des signaux d'écho correspondant respectivement aux impulsions d'ultrason envoyées;
- un dispositif (18) de traitement de données, au moyen duquel une représentation (20) d'une région à contrôler pouvant être donnée à l'avance, de l'objet (12) à contrôler peut être établie sur la base d'une superposition et d'une formation moyenne de valeurs d'amplitude des signaux d'écho reçus;
dans lequel,
- le système (10) comprend un dispositif de détection, au moyen duquel des positions respectives de la tête (16) de contrôle lors de l'envoi des signaux d'ultrasons et/ou lors de la réception des signaux d'écho correspondants peuvent être détectés;
- au moyen du dispositif (18) de traitement de données, la représentation (20) de la région de contrôle de l'objet (12) à contrôler peut être établie en tenant compte des positions détectées respectivement de la tête (16) de contrôle; **caractérisé en ce que**
- le système (10) est conçu pour déterminer, à l'aide des position et orientation détectées de la tête (16) de contrôle, la position médiane de l'ouverture active de la tête (16) de contrôle lors de l'envoi des signaux d'ultrason et pour en tenir compte lors de la production de la représentation (20) de la région à contrôler de l'objet (12) à contrôler, dans lequel par ouverture active, on entend la région de la tête (16) de contrôle, qui sert de surface active d'envoi ou de réception des impulsions d'ultrasons ou des signaux d'écho.

9. Système (10) suivant la revendication 8,
**caractérisé en ce que**
le dispositif de détection comprend un capteur (22) optique de déplacement, qui est monté sur la tête (16) de contrôle et au moyen duquel la position relative respective par rapport à un point de référence peut être détectée.

10. Système (10) suivant la revendication 9,
**caractérisé en ce que**
le dispositif de détection comprend un autre capteur (24) optique de déplacement, qui est monté sur la tête (16) de contrôle en étant éloigné d'une distance donnée à l'avance de l'autre capteur (22) optique de déplacement et au moyen duquel la position respective relative par rapport au point de référence peut être détectée.

11. Système (10 suivant la revendication 8,
**caractérisé en ce que**
le dispositif de détection comprend une pluralité d'émetteurs (28) d'ultrason montés sur la tête (16) de contrôle et au moins un récepteur (30) d'ultrason disposé en étant loin de la tête (16) de contrôle, au moyen duquel la position et l'orientation de la tête (16) de contrôle peuvent être déterminées à l'aide des impulsions d'ultrason envoyées par les émetteurs (28) d'ultrason.

12. Système (10) suivant la revendication 11,
**caractérisé en ce que**
on utilise des émetteurs (28) d'ultrason et le récepteur d'ultrason en les échangeant.

13. Système (10) suivant la revendication 8,
**caractérisé en ce que**
le dispositif de détection comprend un dispositif (32) de maintien pivotant, sur lequel la tête (16) de contrôle est montée mobile en rotation, le dispositif (32) de maintien comprenant un indicateur de trajet de rotation au moyen duquel la position et l'orientation de la tête (16) de contrôle peuvent être déterminées.

14. Système (10) suivant la revendication 8,
**caractérisé en ce que**
le dispositif de détection comprend un dispositif (34) de détection d'images, au moyen duquel une pluralité de repères (36) optiques mis sur la tête (16) de contrôle peut être détectée et sur cette base, la position et/ou l'orientation de la tête (16) de contrôle peut être déterminée.

15. Système (10) suivant la revendication 8,
**caractérisé en ce que**,
le dispositif de détection comprend un dispositif (38) de détection d'images monté sur la tête (16) de contrôle, au moyen duquel une pluralité de repères (40) optiques montés sur la surface (14) de l'objet à contrôler peut être détectée et, sur cette base, la position et l'orientation de la tête (16) de contrôle peuvent être déterminées.

16. Système (10) suivant la revendication 15,
**Caractérisé en ce que**
le dispositif de détection comprend un dispositif (42) de projection, au moyen duquel les repères (40) optiques peuvent être projetés sur la surface (14) de l'objet à contrôler avec un motif pouvant être donné à l'avance.

17. Système (10) suivant l'une des revendications 8 à 15,
**caractérisé en ce que**
la tête (16) de contrôle est constituée sous la forme d'une tête de contrôle verticale, d'une tête de contrôle angulaire, ou d'une tête de contrôle phased-array.
